# EUROPEAN PATENT APPLICATION

(11) **EP 2 905 977 A1**
(43) Date of publication of application: **12.08.2015**
(21) Application number: 14290032.3
(22) Date of filing: 07.02.2014
(51) Int. Cl.: H04W 4/00, H04L 29/06, G06K 7/10

(54) **Apparatuses, systems and methods for near field communication**

(71) Applicant: NXP B.V., 5656 AG Eindhoven (NL)
(72) Inventor: Lepine, Andre, 14906 Caen (FR); Pignorel, Arnoud, 14906 Caen (FR)
(74) Representative: Krott, Michel

(57) **Abstract**

A near-field communication (NFC) apparatus (100) comprises an NFC controller circuit (105) configured and arranged to sense radio frequency (RF) field modulation from an NFC counterpart (or tag) circuit (120) wirelessly and an NFC controller module (125) residing within the NFC controller circuit (105). The NFC controller module (125) is configured and arranged to stress boundaries of an RF field volume at which the NFC controller circuit (105) is able to communicate wirelessly with an NFC counterpart or tag circuit (120), by assessing and attempting to identify, in response to sensing RF field modulation caused by the NFC counterpart or tag circuit (120), which of a plurality of NFC technologies caused the RF field modulation. The NFC controller module (125) is further configured and arranged to activate communication between the NFC counterpart or tag circuit (120) and the NFC controller circuit (105) by using the identified one of the plurality of NFC technologies.

## Description

### FIELD

Aspects of various embodiments are directed to near-field communication.

### BACKGROUND

Near-field communication (NFC) is widely used in a variety of applications to provide radio communications between devices including, *e.g.,* smartphones and similar devices including Radio Frequency Identification (RFID), by touching them together or bringing them into close proximity. Applications include, among others, contactless transactions, data exchange, and simplified setup of more complex communications such as WIFI. In some applications, smart cards and/or RFID tags are used in endeavors such as transport (*e.g.,* ticketing, road tolling, baggage tagging), finance (*e.g.,* debit and credit cards, electronic purses, merchant cards), communications (*e.g.,* SIM cards for GSM phone), and tracking (e.g., access control, inventory management, asset tracking).

While wireless communications as discussed above have been useful, effecting such communication in an efficient, secure and reliable manner can be challenging. For example, powering on the activation procedure of an NFC counterpart (or tag) depends on the type of NFC technology used. Activation of the NFC counterpart (or tag) can fail for a number reasons including, for example, timing of the contact between the NFC device and an NFC tag or counterpart, RF disturbance, technology type detection failure, and/or anti-collision failure.

These and other matters have presented challenges to different types of communications, for a variety of applications.

### SUMMARY

Aspects of the present disclosure are applicable to various communication methods, devices, and systems involving communications (NFC), such as short-range wireless technology (distances measured in centimeters) that is optimized for intuitive, easy, and secure communications between various devices without user configuration. In order to communicate, users bring an NFC apparatus and a NFC counterpart (or tag) close together or even make them touch. The NFC interfaces of the NFC apparatus and the NFC counterpart (or tag) can automatically connect and configure themselves to form a peer-to-peer network. NFC can also bootstrap with other protocols, such as Bluetooth™ or Wireless Ethernet (WiFi), by exchanging configuration and session data.

Various aspects of the present disclosure are directed toward near-field communication (NFC) apparatuses. The NFC apparatuses include an NFC controller circuit that senses radio frequency (RF) field modulation from an NFC counterpart (or tag) circuit wirelessly. An NFC controller module resides within the NFC controller circuit. The NFC controller module stresses boundaries of an RF field volume at which the NFC controller circuit is able to communicate wirelessly with an NFC counterpart circuit. In response to sensing RF field modulation caused by the NFC counterpart circuit, the NFC controller circuit communicates wirelessly with the NFC counterpart circuit by assessing and attempting to identify which of a plurality of NFC technologies caused the RF field modulation. The NFC controller module also activates communication between the NFC counterpart circuit and the NFC controller circuit by using the identified one of the plurality of NFC technologies.

Various aspects of the present disclosure are also directed toward NFC systems. The NFC systems include an NFC controller circuit that senses RF field modulation. Further, an NFC counterpart (or tag) circuit is provided in the NFC systems which is configured and arranged with the NFC controller circuit for communicating wirelessly in near-field proximity with the NFC controller circuit. An NFC controller module resides within the NFC controller circuit, which stresses boundaries of an RF field volume at which the NFC controller circuit is able to communicate wirelessly with an NFC counterpart or tag circuit. The boundaries are stressed by assessing and attempting to identify, in response to sensing RF field modulation caused by the NFC counterpart or tag circuit, which of a plurality of NFC technologies caused the RF field modulation. The NFC controller module also activates communication between the NFC counterpart or tag circuit and the NFC controller circuit by using the identified one of the plurality of NFC technologies.

Aspects of the present disclosure are also directed toward NFC communication apparatuses that include an NFC controller circuit, an NFC counterpart or tag circuit, and an NFC controller module. The NFC controller circuit is configured and arranged to sense RF field modulation. The NFC counterpart or tag circuit is configured and arranged with the NFC controller circuit for communicating wirelessly in near-field proximity with the NFC controller circuit. Additionally, the near-field proximity between the NFC counterpart or tag circuit and the NFC controller circuit spans an RF field volume having outer boundaries at which the NFC controller circuit is sufficiently proximate to the NFC counterpart or tag circuit for sensing the radio frequency (RF) field modulation. The radio frequency (RF) field modulation is caused by the NFC counterpart or tag circuit, yet is sufficiently distant that activation of the NFC controller circuit for communicating wirelessly with the NFC controller circuit is susceptible to failure. The NFC controller module resides within the NFC controller circuit and is configured and arranged to provide access to a plurality of NFC technologies (each respectively corresponding to a plurality of NFC-technology phases). The NFC controller module is also configured and arranged to assess, in response to sensing RF field modulation caused by the NFC counterpart or tag circuit, which of the plurality of NFC technologies caused the RF field modulation by using corresponding ones of the plurality of NFC-technology phases as part of a communication-activation process.

Aspects of the present disclosure are also directed toward methods for NFC communication between an NFC controller circuit and an NFC counterpart or tag circuit. The methods include using the NFC controller circuit to sense RF field modulation caused by the NFC counterpart or tag circuit while in near-field proximity. Additionally, the methods further include using an NFC controller module within the NFC controller circuit to stress boundaries of an RF field volume at which the NFC controller circuit is able to communicate wirelessly with NFC counterpart or tag circuit by assessing and identifying, in response to sensing RF field modulation caused by the NFC counterpart or tag circuit, which of a plurality of NFC technologies caused the RF field modulation. The methods also include using the NFC controller module within the NFC controller circuit to activate communications between the NFC counterpart or tag circuit and the NFC controller circuit by using the identified one of the plurality of NFC technologies.

The above discussion/summary is not intended to describe each embodiment or every implementation of the present disclosure. The figures and detailed description that follow also exemplify various embodiments.

### DESCRIPTION OF THE FIGURES

Various example embodiments may be more completely understood in consideration of the following detailed description in connection with the accompanying drawings, in which:
FIG. 1 shows a system level block diagram of an NFC apparatus and NFC counterpart (or tag) circuit, consistent with various aspects of the present disclosure;
FIG. 2A shows an example flow chart of activation of an NFC apparatus in response to an NFC counterpart (or tag) circuit, consistent with various aspects of the present disclosure;
FIG. 2B shows another example flow chart of activation of an NFC apparatus in response to an NFC counterpart (or tag) circuit, consistent with various aspects of the present disclosure;
FIG. 3 shows an example activation/detection scheme where no detection occurs, consistent with various aspects of the present disclosure;
FIG. 4 shows an example activation/detection scheme when first detections fail, consistent with various aspects of the present disclosure; and
FIG. 5 shows an example activation/detection scheme when first activations fail, consistent with various aspects of the present disclosure.

While various embodiments discussed herein are amenable to modifications and alternative forms, aspects thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the disclosure including aspects defined in the claims. In addition, the term "example" as used throughout this application is only by way of illustration, and not limitation.

### DETAILED DESCRIPTION

Aspects of the present disclosure are believed to be applicable to a variety of different types of apparatuses, systems and methods involving activation of any NFC counterpart. Activation of the NFC counterpart includes sensing and activation. The speed of activation is increased, for example, at least in part by reducing the latency between the sensing step and the NFC counterpart activation. While not necessarily so limited, various aspects may be appreciated through a discussion of examples using this context.

Various aspects of the present disclosure are directed toward near-field communication (NFC) apparatuses. The NFC apparatuses include an NFC controller circuit that senses radio frequency (RF) field modulation from an NFC counterpart (or tag) circuit wirelessly. An NFC controller module resides within the NFC controller circuit. The NFC controller module stresses boundaries of an RF field volume at which the NFC controller circuit is able to communicate wirelessly with an NFC counterpart circuit. In response to sensing an RF field modulation caused by the NFC counterpart circuit, the NFC controller circuit communicates wirelessly with the NFC counterpart circuit by assessing and attempting to identify which of a plurality of NFC technologies caused the RF field modulation. The NFC controller module also activates communication between the NFC counterpart circuit and the NFC controller circuit by using the identified one of the plurality of NFC technologies.

In certain more specific embodiments, the NFC controller module also stresses the boundaries by assessing and identifying each of a plurality of polling-loop procedures corresponding to a respective one of the plurality of NFC technologies and one of a plurality of NFC-technology phases unique to the respective one of the plurality of NFC technologies.

Various aspects of the present disclosure are also directed toward NFC systems. The NFC systems include an NFC controller circuit that senses RF field modulation. Further, an NFC counterpart or tag circuit is provided in the NFC systems which is configured and arranged with the NFC controller circuit for communicating wirelessly in near-field proximity with the NFC controller circuit. An NFC controller module resides within the NFC controller circuit, which stresses boundaries of an RF field volume at which the NFC controller circuit is able to communicate wirelessly with NFC counterpart or tag circuit. The boundaries are stressed by assessing and attempting to identify, in response to sensing RF field modulation caused by the NFC counterpart or tag circuit, which of a plurality of NFC technologies caused the RF field modulation. The NFC controller module also activates communication between the NFC counterpart or tag circuit and the NFC controller circuit by using the identified one of the plurality of NFC technologies. Additionally, in certain embodiments, the NFC controller module activates communication between the NFC counterpart circuit and the NFC controller circuit based on the identified one of the plurality of NFC technologies only once. However, in this specific embodiment, the activation occurs only once, unless an exception incident is detected. If the exception incident is detected, the activation is retried via said identified one of the plurality of NFC technologies at least one additional time.

Additionally, in certain embodiments, the NFC controller module is a circuit that executes an algorithm to minimize the time until activated communication is established between the NFC counterpart or tag circuit and the NFC controller circuit. The execution occurs relative to the NFC controller module sensing RF field modulation caused by the NFC counterpart or tag circuit, by processing a plurality of NFC-technology phases. Each NFC-technology phase corresponds to one of the plurality of NFC technologies, and execution occurs until the identified one of the plurality of NFC technologies is activated. Further, in other embodiments, the NFC controller module stresses the boundaries by assessing and identifying (in each of a plurality of polling-loop procedures) one of the plurality of NFC technologies and one of a plurality of NFC-technology phases unique to the respective one of the plurality of NFC technologies. Moreover, other embodiments of the present disclosure are characterized in that the NFC controller module activates communication between the NFC counterpart or tag circuit and the NFC controller circuit based on the identified one of the plurality of NFC technologies, only once an exception incident is detected. In such embodiments, if the exception incident is detected, the activation is retried via said identified one of the plurality of NFC technologies at least one additional time.

In certain embodiments of the present disclosure, the NFC controller module also performs a first level of activation boost as part of a polling loop management procedure, during which said assessing occurs in response to sensing RF field modulation caused by the NFC counterpart or tag circuit. Additionally, in response to an identification of which of a plurality of NFC technologies caused the RF field modulation and to a failure to activate via the identified one of the plurality of NFC technologies, the NFC controller module performs another level of activation boost. This occurs by assessing whether an exception incident may have prevented the activation and retrying the activation via said identified one of the plurality of NFC technologies at least one additional time. Further, the NFC controller module, in certain embodiments, can activate communication between the NFC counterpart or tag circuit and the NFC controller circuit based on the identified one of the plurality of NFC technologies only once, unless one of plurality of exception incidents is detected. The plurality of exception incidents includes at least one of the following: the exception incident is detected, retrying the activation via said identified one of the plurality of NFC technologies at least one additional time, and failing to activate the communication between the NFC counterpart or tag circuit and the NFC controller circuit. Additionally, in certain more specific embodiments, the exception incident is based on at least one of the following occurring during the attempt to activate: a timer indicating a special timing incident; an exception identified by a protocol corresponding to the identified one of the plurality of NFC technologies; and an exception corresponding to transport of an inconsistent control message via the identified one of the plurality of NFC technologies.

Aspects of the present disclosure are also directed toward NFC communication apparatuses that include an NFC controller circuit, an NFC counterpart or tag circuit, and an NFC controller module. The NFC controller circuit is configured and arranged to sense RF field modulation. The NFC counterpart or tag circuit is configured and arranged with the NFC controller circuit for communicating wirelessly in near-field proximity with the NFC controller circuit. Additionally, the near-field proximity between the NFC counterpart or tag circuit and the NFC controller circuit spans an RF field volume having outer boundaries at which the NFC controller circuit is sufficiently proximate to the NFC counterpart or tag circuit for sensing the radio frequency (RF) field modulation. The radio frequency (RF) field modulation is caused by the NFC counterpart or tag circuit, yet is sufficiently distant that activation of the NFC controller circuit for communicating wirelessly with the NFC controller circuit is susceptible to failure. The NFC controller module resides within the NFC controller circuit and is configured and arranged to provide access to a plurality of NFC technologies (each respectively corresponding to a plurality of NFC-technology phases). The NFC controller module is also configured and arranged to assess, in response to sensing RF field modulation caused by the NFC counterpart or tag circuit, which of the plurality of NFC technologies caused the RF field modulation by using corresponding ones of the plurality of NFC-technology phases as part of a communication-activation process.

In certain more specific embodiments, the NFC controller module activates communication between the NFC counterpart or tag circuit and the NFC controller circuit based on the identified one of the plurality of NFC technologies only once, unless an exception incident is detected. If the exception incident is detected, the activation is retried via one of the identified plurality of NFC technologies at least one additional time. The exception incident is based on at least one of the following occurring during the attempt to activate: a timer indicating a special timing incident; an exception identified by a protocol corresponding to the identified one of the plurality of NFC technologies; and an exception corresponding to transport of an inconsistent control message via the identified one of the plurality of NFC technologies. Further, in certain embodiments, the NFC controller module can also perform a first level of activation boost as part of a polling-loop management procedure, during which said assessing occurs in response to sensing RF field modulation caused by the NFC counterpart or tag circuit. Additionally, in such an embodiment, in response to an identification of which of a plurality of NFC technologies caused the RF field modulation and to a failure to activate via the identified one of the plurality of NFC technologies, the NFC controller module performs another level of activation boost. The activation boost occurs by assessing whether an exception incident may have prevented the activation and retrying the activation via said identified one of the plurality of NFC technologies at least one additional time. Moreover, the exception incident is based on at least one of the following occurring during the attempt to activate an exception identified by a protocol corresponding to the identified one of the plurality of NFC technologies and an unrecoverable control message sequence error.

Aspects of the present disclosure are also directed toward methods for NFC communication between an NFC controller circuit and an NFC counterpart or tag circuit. The methods include using the NFC controller circuit to sense RF field modulation caused by the NFC counterpart or tag circuit while in near-field proximity. Additionally, the methods further include using an NFC controller module within the NFC controller circuit to stress. boundaries of an RF field volume at which the NFC controller circuit is able to communicate wirelessly with NFC counterpart or tag circuit by assessing and identifying, in response to sensing RF field modulation caused by the NFC counterpart or tag circuit, which of a plurality of NFC technologies caused the RF field modulation. The methods also include using the NFC controller module within the NFC controller circuit to activate communication between the NFC counterpart or tag circuit and the NFC controller circuit by using the identified one of the plurality of NFC technologies. In certain embodiments, methods also include assessing that one of a plurality of exceptions is present and in response thereto, retrying activation via said identified one of the plurality of NFC technologies at least one additional time.

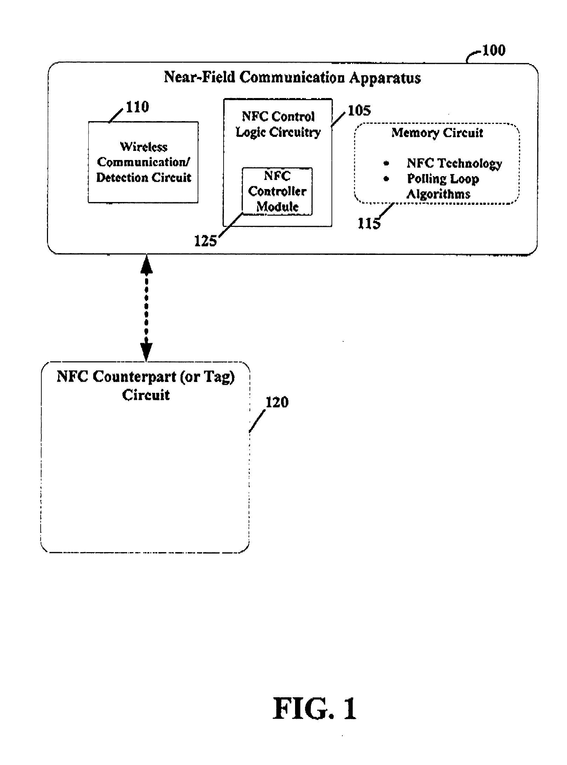

FIG. 1 shows a system level block diagram of an NFC apparatus and NFC counterpart (or tag) circuit, consistent with various aspects of the present disclosure. The block level diagram can be a part of a system, apparatus, or method of using such a system or apparatus. FIG. 1 shows an NFC apparatus 100 that includes an NFC controller circuit 105 (*e.g.,* NFC control logic circuitry), a wireless communication/detection circuit 110, and a memory circuit 115. The NFC controller circuit 105 wirelessly communicates, via the wireless communication/detection circuit 110 with an NFC counterpart (or tag) circuit 120. As explained in detail above, the NFC controller circuit 105 wirelessly senses radio frequency (RF) field modulation from the NFC counterpart (or tag) circuit 120. An NFC controller module 125 resides within the NFC controller circuit 105. The NFC controller module 125 stresses boundaries of an RF field volume at which the NFC controller circuit 105 is able to communicate wirelessly with an NFC counterpart circuit (by way of the wireless communication/detection circuit 110). In response to sensing RF field modulation caused by the NFC counterpart or tag circuit 120, the NFC controller circuit 105 communicates wirelessly with the NFC counterpart circuit 120 by assessing and attempting to identify which of a plurality of NFC technologies caused the RF field modulation. Data/information needed for such assessing is stored in the memory circuit 115. The NFC controller circuit 105 also activates communication between the NFC counterpart circuit 120 and the NFC controller circuit 105 by using the identified one of the plurality of NFC technologies.

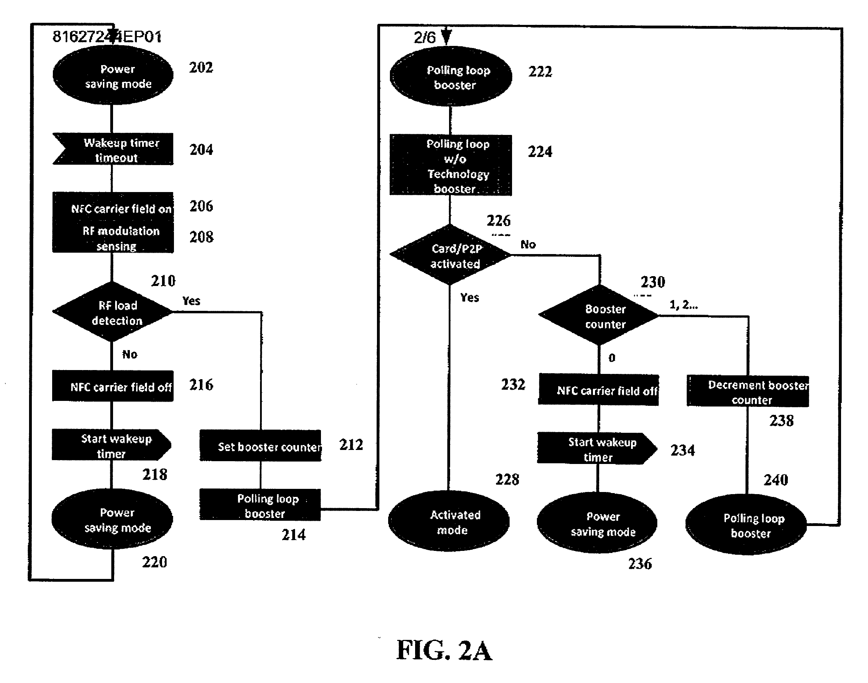

In certain more specific embodiments, the NFC counterpart or tag circuit 120 is configured with the NFC controller circuit 105 for communicating wirelessly in near-field proximity with the NFC controller circuit 105. The near-field proximity between the NFC counterpart or tag circuit 120 and the NFC controller circuit 105 spans an RF field volume having outer boundaries at which the NFC controller circuit 105 is sufficiently proximate the NFC counterpart or tag circuit 120 for sensing the radio frequency (RF) field modulation. The RF field modulation is caused by the NFC counterpart or tag circuit 120. The distance between the NFC counterpart or tag circuit 120 and the NFC controller circuit 105 is sufficiently distant that activation of the NFC controller circuit 120 for communicating wirelessly with the NFC controller circuit 105 is susceptible to failure. Other specific embodiments and operations carried out by the aspects shown in FIG. 1 are described in detail above, and with reference to the flow charts and example activation/detection schemes as shown and described with reference to FIGs. 2A-5.

FIG. 2A shows an example flow chart of activation of an NFC apparatus in response to an NFC counterpart (or tag) circuit, consistent with various aspects of the present disclosure. The activation/detection begins with an NFC controller circuit in a power saving mode, as is shown at block 202. As is shown at 204, a wakeup timer wakes up the NFC controller circuit. Subsequently, as is shown at block 206, the NFC controller circuit powers on and fills an NFC volume with an RF field carrier. The NFC controller circuit senses the RF modulation, and integrates its value during the tag detector time, as is shown at block 208. As is demonstrated at block 210, and upon detection of an abnormal RF load, the NFC controller circuit sets a booster counter to a user defined value (shown at block 212), and the NFC controller circuit enters the polling-loop booster process (as is shown at block 214). However, if there is no detection of an abnormal RF load, the NFC field carrier is switched off (as is shown at block 216), and the wakeup timer is engaged for another time (as is shown at block 218). In this instance, activation/detection can begin again, as is shown at block 220.

In a polling loop booster process (as is shown at block 222), a predefined polling loop process is called (as is shown at block 224). It might use the technology activation booster or proceed to a normal polling loop. When the polling loop ends, the polling loop exit status determines if the NFC counterpart has been activated or not (as is shown at block 226). If the NFC counterpart has been activated, the NFC controller circuit enters in activated mode (as is shown at block 228) and the NFC controller circuit is ready to exchange data with the NFC counterpart. If the NFC counterpart has not been activated, a booster counter value is checked (as is shown at block 230). If the booster counter value is null, the maximum number of polling loop booster trials has been reached and the activation of the NFC tag circuit by the NFC controller circuit has failed. As a result of the maximum number of polling loop booster trials having been reached, the RF field carrier is switched off (as is shown in block 232), and the wakeup timer is engaged (as is shown at block 234). Subsequently, the NFC controller circuit enters the power saving mode (as is shown at block 236). If the booster counter is not null, the booster counter is decremented (as is shown at block 238) and another polling loop booster run is attempted (as is shown at block 240).

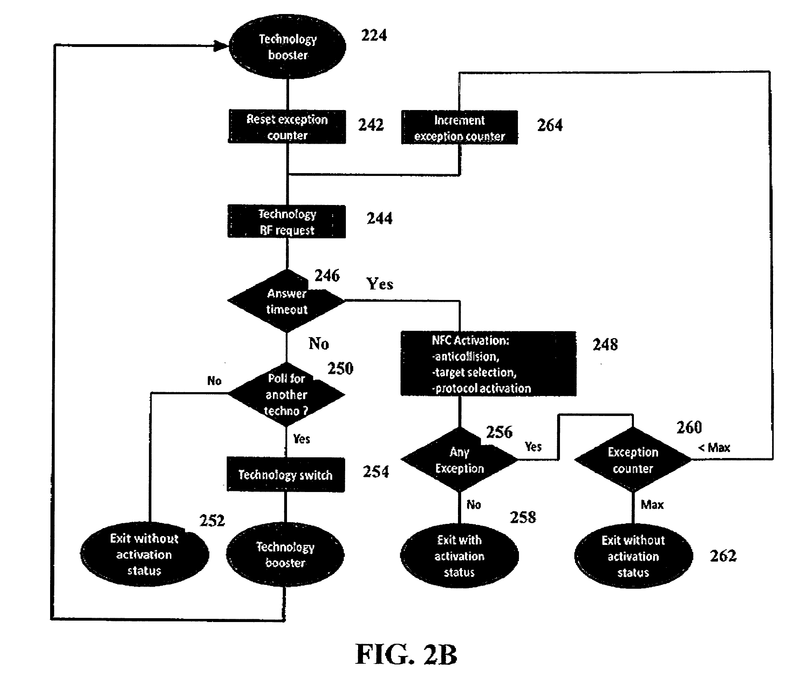

FIG. 2B shows another example flow chart of activation of an NFC apparatus in response to an NFC counterpart (or tag) circuit, consistent with various aspects of the present disclosure. As is shown in block 224, during a technology polling loop, the technology activation booster can be used according to user defined settings. After entering the technology booster process, an exception counter is reset to zero (as is shown in block 242). According to the polling loop configuration, a technology is requested/checked (as is shown at block 244) by requesting an answer/command in the NFC volume. If an answer is detected in the technology requested before the answer timeout (as is shown at block 246), an NFC counterpart has been discovered in this technology. The technology booster will focus on this technology, and will activate the NFC counterpart (as is shown at block 248). If an answer is not detected in the technology requested before the answer timeout, the polling loop process will check for any other discovery request (as is shown in block 250). If no other discovery is requested or all discovery requests have been tried, then the polling loop process with technology booster ends with an activation failed status (as is shown in block 252). If the NFC controller circuit has several discovery requests, and all have not been attempted, the polling loop proceeds with the next discovery request (as is shown in block 254).

In activating the NFC counterpart (as is shown at block 248), the technology booster determines if the activation of the technology has failed for any reason (timeout, transmission error, protocol error) that is specified as an exception by the NFC standards (as is shown at block 256). If activation of the technology has not failed, the activation is passed and the NFC counterpart is ready for NFC data exchange (as is shown at block 258). In the case an exception is raised and the NFC activation failed, the NFC controller circuit checks if the maximum exception number has been reached (as is shown at block 260). If the maximum exception number has been reached, the polling loop process (with technology booster ends) with an activation failed status (as is shown at block 262). If the maximum exception count has not been reached, the exception counter in increased (as is shown at block 264) and the same technology is tried again. The exception counter maximum value can be user defined.

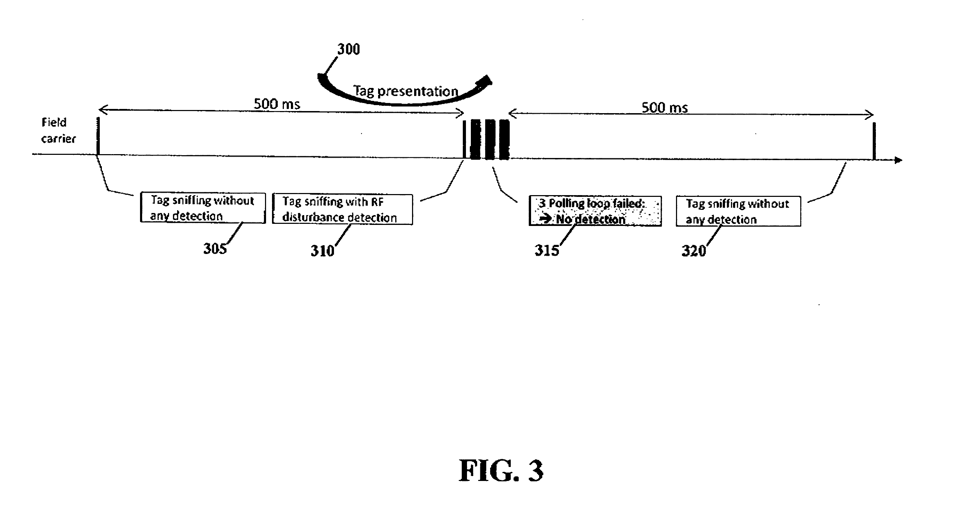

FIG. 3 shows an example activation/detection scheme where no detection occurs, consistent with various aspects of the present disclosure. FIG. 3 shows an example where a tag is presented 300 to an NFC controller circuit without detection. Tag sniffing occurs 305 near the field carrier without any detection. In order to reduce power consumption of the NFC controller circuit, the tag detection feature senses any NFC field modulation by tag sniffing with RF disturbance detection 310. In the NFC volume, there is a time limit for detection such as, for example, 500 ms. Attempted detection of the tag upon tag presentation includes multiple polling loops as described in further detail above. A full phase of a polling loop run lasts approximately 50 ms, for example. When a specific technology phase fails, there is no other attempted trial for the technology in the current polling loop; however, there is another in the next polling loop 315. After there is no detection, the tag sniffing loop 320 can begin again. The tag may not be detected by the NFC controller circuit, for example, if there is a tag presented, but removed immediately, or if there is a physical disturbance in the NFC volume that creates an RF modulation.

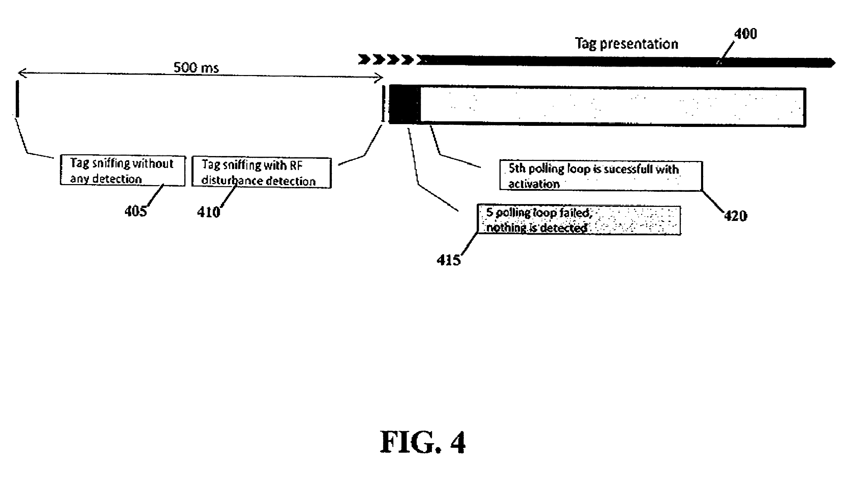

FIG. 4 shows an example activation/detection scheme when first detections fail, consistent with various aspects of the present disclosure. In the example shown, the tag enters an NFC field with an NFC controller circuit, but the tag enters the field slowly, and the polling loop is started too early. As can be seen in FIG. 4, tag presentation 400 occurs after tag sniffing without any detection occurs 405. The tag sniffing occurs with RF disturbance detection 410, as described in further detail above. Multiple polling loops can occur, such as the five polling loops shown in FIG. 4. For example, four polling loops failed 415 based on the tag presentation 400 occurring after tag sniffing without any detection occurs 405. However, the fifth polling loop 420 is successful, and the tag is detected and activated. The activation procedure depends on the NFC technology used. For instance, the counterpart should be in the NFC RF volume for a minimum duration of during 5 ms such that the tag can power up (energy load by means of RF coupling). After powering up or activation, the tag is able to receive an NFC request command from the NFC controller circuit, and send an NFC answer.

As is the case in FIG. 4, when the NFC tag (or counterpart) enters slowly in the NFC RF volume, the NFC controller might start the activation procedure too soon after the tag detection. Despite the NFC controller maintaining the NFC RF field for a set time (*e.g.,* 5 ms), the RF coupling starts after the start of the NFC RF field powering start and the NFC counterpart boot sequence is not yet finished. However, each technology detection and activation matches a unique phase of the NFC polling loop. The NFC polling loop might contain several different NFC technology detection and activation phases according to its phase configuration.

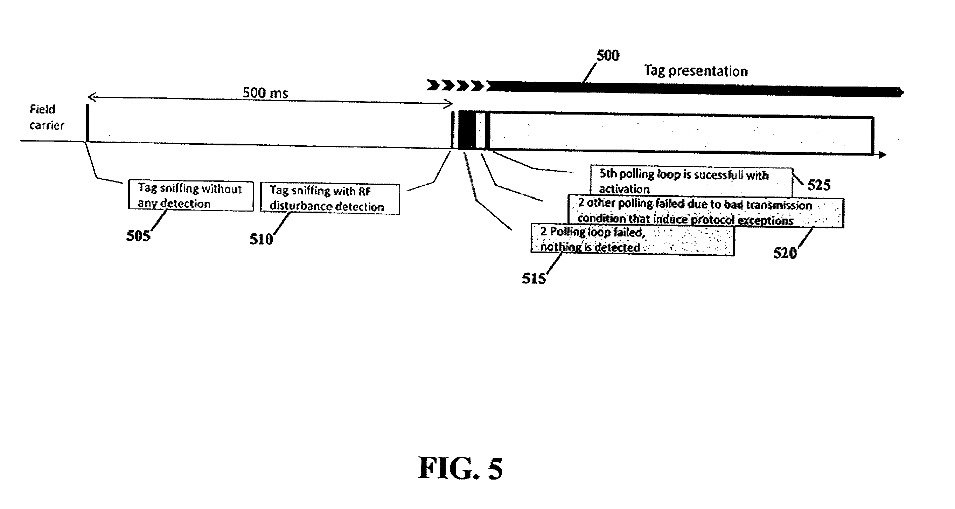

FIG. 5 shows another example activation/detection scheme when first detections fail, consistent with various aspects of the present disclosure. In the example shown, tag presentation 500 occurs after tag sniffing without any detection occurs 505. The tag sniffing occurs with RF disturbance detection 510, as described in further detail above. Multiple polling loops can occur for detection/activation. In the example shown in FIG. 5, two polling loops fail without detection 515. However, further polling loops can also be made. For instance, two other polls fail due to a poor transmission condition that induce protocol exceptions (*e.g.,* timer, protocol, transport, disturbance) 520. More specifically, the activation might fail despite the NFC counter succeeding in powering on in time due to: RF disturbance, technology type detection failure, anti-collision failure, counterpart moving closely from the NFC volume edge. Finally, a fifth polling loop succeeds in activation the tag 525. After powering up or activation, the tag is able to receive an NFC request command from the NFC controller circuit, and send an NFC answer.

Each technology detection and activation matches a unique phase of the NFC polling loop. The NFC polling loop can contain several different NFC technology detection and activation phases (according to its phase configuration). A full phase's polling loop run can last approximately 50 ms. When a specific technology phase fails, there is no other attempted trial in the current polling loop, but in the next polling loop. A default delay is between two polling loops (which can be approximately 1 second). Thus, when a technology specific activation fails, the next activation procedure for this technology can start after the default delay.

Various aspects of the present disclosure are directed toward use of a low power mode with a feature like tag detection. After a detection of any RF modulation load the NFC controller circuit leaves the low power mode and highly stresses the NFC RF volume in order to speed up activation. A first level of activation booster can be performed at the polling loop management level (a polling loop booster process). When the polling loop starts (*i.e.* after tag detection), several NFC technologies are checked according to the NFC controller configuration. The polling loop is composed of several phases, one phase per technology. When all the polling loop phases have been tried unsuccessfully, i.e. no activation has been performed, the polling loop booster prevents the system from returning to a power saving mode. Additionally, the polling loop booster starts another polling loop run multiple times until the activation is passed or the maximum boost trials have been reached (the maximum booster trials value is user defined). Further, a second level of activation booster can be performed at the technology activation process level inside the polling loop (technology booster process). The technology booster process is used during the polling loop. When a technology detection has been confirmed but the activation has failed, some exceptions might be raised (timer, protocol, transport). The technology booster can analyze the exception to confirm a technology detection. Further, upon exception, the technology booster process prevents the polling loop from switching the technology and retries activating the detected technology until the activation is completed or the exception counter has reached its maximum value.

Various circuit-based building blocks and/or other modules may be implemented to carry out one or more of the operations and activities described herein and/or shown in the Figures. In such contexts, the illustrated/described "block" or "module" corresponds to circuitry that carries out one or more of these (or related) operations/activities. For example, in certain of the above-discussed embodiments, one or more blocks are discrete logic circuits or programmable logic circuits, configured and arranged for implementing these operations/activities, as in the circuit modules shown in the Figures, such as the wireless communication/detection circuit, NFC control logic circuitry, the memory circuit, and the NFC counterpart or tag circuit, as shown in FIG. 1. In certain embodiments, the programmable circuit is one or more computer circuits programmed to execute a set (or sets) of instructions (and/or configuration data). The instructions (and/or configuration data) can be in the form of firmware or software stored in and accessible from a memory (circuit). As an example, first and second modules include a combination of a CPU hardware-based circuit and a set of instructions in the form of firmware, where the first module includes a first CPU hardware circuit with one set of instructions and the second module includes a second CPU hardware circuit with another set of instructions.

Based upon the above discussion and illustrations, those skilled in the art will readily recognize that various modifications and changes may be made without strictly following the exemplary embodiments and applications illustrated and described herein. Furthermore, various features of the different embodiments may be implemented in different combinations. Such modifications do not depart from the true spirit and scope of the present disclosure, including those set forth in the following claims.

## Claims

1. A near-field communication (NFC) apparatus (100) comprising:
- an NFC controller circuit (105) configured and arranged to sense radio frequency (RF) field modulation from an NFC counterpart or tag circuit (120) wirelessly; and an NFC controller module (125) residing within the NFC controller circuit (105) and configured and arranged to:
- stress boundaries of an RF field volume at which the NFC controller circuit (105) is able to communicate wirelessly with the NFC counterpart or tag circuit (120) by assessing and attempting to identify, in response to sensing RF field modulation caused by the NFC counterpart circuit, which of a plurality of NFC technologies caused the RF field modulation; and
- activate communication between the NFC counterpart or tag circuit (120) and the NFC controller circuit (105) by using the identified one of the plurality of NFC technologies.

2. The apparatus of claim 1, wherein the NFC controller module (125) is further configured and arranged to stress the boundaries by assessing and identifying, in each of a plurality of polling-loop procedures, each corresponding to a respective one of the plurality of NFC technologies and one of a plurality of NFC-technology phases unique to the respective one of the plurality of NFC technologies.

3. The apparatus of one or more of the above claims, wherein the NFC controller module (125) is further configured and arranged to
- activate communication between the NFC counterpart or tag circuit (120) and the NFC controller circuit (105) based on the identified one of the plurality of NFC technologies only once, unless an exception incident is detected, and
- if the exception incident is detected, retry the activation via said identified one of the plurality of NFC technologies at least one additional time.

4. A near-field communication (NFC) system comprising:
- an NFC controller circuit (105) configured and arranged to sense radio frequency (RF) field modulation;
- an NFC counterpart or tag circuit (120) configured and arranged with the NFC controller circuit (105) for communicating wirelessly in near-field proximity with the NFC controller circuit (105); and
- an NFC controller module (125) residing within the NFC controller circuit (105) and configured and arranged to:
- stress boundaries of an RF field volume at which the NFC controller circuit (105) is able to communicate wirelessly with the NFC counterpart or tag circuit (120) by assessing and attempting to identify, in response to sensing RF field modulation caused by the NFC counterpart or tag circuit, which of a plurality of NFC technologies caused the RF field modulation; and
- activate communication between the NFC counterpart or tag circuit (120) and the NFC controller circuit (105) by using the identified one of the plurality of NFC technologies.

5. The apparatus of one or more of the above claims, wherein the NFC controller module (125) is a circuit that is further configured and arranged to execute an algorithm to minimize the time until activated communication is established between the NFC counterpart or tag circuit (120) and the NFC controller circuit (105) relative to the NFC controller module (125) sensing RF field modulation caused by the NFC counterpart or tag circuit (120), by processing a plurality of NFC-technology phases, each corresponding to one of the plurality of NFC technologies, until the identified one of the plurality of NFC technologies is activated.

6. The apparatus of one or more of the above claims, wherein the NFC controller module (125) is further configured and arranged to stress the boundaries by assessing and identifying, in each of a plurality of polling-loop procedures, one of a plurality of NFC-technology phases unique to the respective one of the plurality of NFC technologies.

7. The apparatus of one or more of the above claims, wherein the NFC controller module (125) is further configured and arranged to activate communication between the NFC counterpart or tag circuit (120) and the NFC controller circuit (105) based on the identified one of the plurality of NFC technologies only once unless an exception incident is detected and if the exception incident is detected, retry the activation via said identified one of the plurality of NFC technologies at least one additional time.

8. The apparatus of one or more of the above claims, wherein the NFC controller module (125) is further configured and arranged to:
- perform a first level of activation boost as part of a polling loop management procedure during which said assessing occurs in response to sensing RF field modulation caused by the NFC counterpart or tag circuit; and
- in response to an identification of which of a plurality of NFC technologies caused the RF field modulation and to a failure to activate via the identified one of the plurality of NFC technologies, perform another level of activation boost by assessing whether an exception incident may have prevented the activation and retrying the activation via said identified one of the plurality of NFC technologies at least one additional time.

9. The apparatus of one or more of the above claims, wherein the NFC controller module (125) is further configured and arranged to activate communication between the NFC counterpart or tag circuit (120) and the NFC controller circuit (105) based on the identified one of the plurality of NFC technologies only once unless one of plurality of exception incidents is detected, the plurality of exception incidents including at least one of the following: wherein the exception incident is detected, retrying the activation via said identified one of the plurality of NFC technologies at least one additional time, and failing to activate the communication between the NFC counterpart or tag circuit (120) and the NFC controller circuit (105).

10. The apparatus of one or more of claims, wherein the exception incident is based on at least one of the following occurring during the attempt to activate:
- a timer indicating a special timing incident;
- an exception identified by a protocol corresponding to the identified one of the plurality of NFC technologies; and
- an exception corresponding to transport of an inconsistent control message via the identified one of the plurality of NFC technologies.

11. An near-field communication (NFC) apparatus comprising:
- an NFC controller circuit (105) configured and arranged to sense radio frequency (RF) field modulation;
- an NFC counterpart or tag circuit (120) configured and arranged with the NFC controller circuit (105) for communicating wirelessly in near-field proximity with the NFC controller circuit (105), the near-field proximity between the NFC counterpart or tag circuit (120) and the NFC controller circuit (105) spanning an RF field volume having outer boundaries at which the NFC controller circuit (105) is sufficiently proximate the NFC counterpart or tag circuit (120) for sensing the radio frequency (RF) field modulation caused by the NFC counterpart or tag circuit (120), yet sufficiently distant that activation of the NFC controller circuit (105) for communicating wirelessly with the NFC controller circuit (105) is susceptible to failure; and
- an NFC controller module (125) residing within the NFC controller circuit (105) and configured and arranged to:
- provide access to a plurality of NFC technologies, each respectively corresponding to a plurality of NFC-technology phases; and
- assess, in response to sensing RF field modulation caused by the NFC counterpart or tag circuit, which of the plurality of NFC technologies caused the RF field modulation by using corresponding ones of the plurality of NFC-technology phases as part of a communication-activation process.

12. The apparatus of claim 11, wherein the NFC controller module (125) is further configured and arranged to
- activate communication between the NFC counterpart or tag circuit (120) and the NFC controller circuit (105) based on the identified one of the plurality of NFC technologies only once unless an exception incident is detected, and
if the exception incident is detected, retry the activation via said identified one of the plurality of NFC technologies at least one additional time, wherein the exception incident is based on at least one of the following occurring during the attempt to activate:
- a timer indicating a special timing incident;
- an exception identified by a protocol corresponding to the identified one of the plurality of NFC technologies; and
- an exception corresponding to transport of an inconsistent control message via the identified one of the plurality of NFC technologies.

13. The apparatus of one or more of claims 11 and 12, wherein the NFC controller module (125) is further configured and arranged to:
- perform a first level of activation boost as part of a polling loop management procedure during which said assessing occurs in response to sensing RF field modulation caused by the NFC counterpart or tag circuit; and
- in response to an identification of which of a plurality of NFC technologies caused the RF field modulation and to a failure to activate via the identified one of the plurality of NFC technologies, perform another level of activation boost by assessing whether an exception incident may have prevented the activation and retrying the activation via said identified one of the plurality of NFC technologies at least one additional time; wherein the exception incident is based on at least one of the following occurring during the attempt to activate an exception identified by a protocol corresponding to the identified one of the plurality of NFC technologies.

14. A method for near-field communication (NFC) between an NFC controller circuit (105) and an NFC counterpart or tag circuit, the method comprising:
- using the NFC controller circuit (105) to sense radio frequency (RF) field modulation caused by the NFC counterpart or tag circuit (120) while in near-field proximity; and
- using an NFC controller module (125) within the NFC controller circuit (105) to:
- stress boundaries of an RF field volume at which the NFC controller circuit (105) is able to communicate wirelessly with NFC counterpart or tag circuit (120) by assessing and identifying, in response to sensing RF field modulation caused by the NFC counterpart or tag circuit, which of a plurality of NFC technologies caused the RF field modulation; and
- activate communication between the NFC counterpart or tag circuit (120) and the NFC controller circuit (105) by using the identified one of the plurality of NFC technologies.

15. The method of claim 14, further including assessing that one of a plurality of exceptions is present and in response thereto, retrying activation via said identified one of the plurality of NFC technologies at least one additional time.
